# EUROPEAN PATENT SPECIFICATION

(11) **EP 1 931 038 B1**
(45) Date of publication and mention of the grant of the patent: **21.05.2014**
(21) Application number: 07122194.9
(22) Date of filing: 04.12.2007
(51) Int. Cl.: H04B 1/08, B60R 11/02, H05K 11/02

(54) **Electronic system, electronic apparatus and method of operating audio unit**
Elektronisches System, elektronische Vorrichtung und Verfahren zum Betrieb einer Audioeinheit
Système électronique, appareil électronique et procédé de fonctionnement d'une unité audio

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(43) Date of publication of application: 11.06.2008
(73) Proprietor: FUJITSU TEN LIMITED, Kobe-shi Hyogo 652-8510 (JP)
(72) Inventor: Ozaki, Yukisuke, Kobe-shi Hyogo 652-8510 (JP); Sakai, Tomohiro, Kobe-shi Hyogo 652-8510 (JP)
(74) Representative: Ward, James Norman

(56) References cited:
- EP-A- 1 727 019
- DE-A1- 19 803 178
- US-B1- 6 701 161

## Description

This invention relates to an electronic system having an electronic apparatus mounted in a vehicle and a portable electronic apparatus attachable and detachable to and from the electronic apparatus.

As conventional navigation apparatuses, there are widely known small-sized portable navigation apparatuses with simplified structure and portability (hereinafter, referred to as Portable Navi), also known as PND (Personal Navigation Device); and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, the navigation apparatuses with portability of the Portable Navi and high-accuracy guide function of the in-vehicle navigation apparatus have been studied.

Japanese Patent Application Publication No. 8-318792, Japanese Patent Application Publication No. 2002-328026, Japanese Patent Application Publication No. 2005-524570, and Japanese Patent Application Publication No. 2001-239895 disclose a configuration where a navigation portion can be detached from an in-vehicle apparatus mounted in a vehicle. By removing the navigation portion from the in-vehicle apparatus, the navigation portion can be used as a Portable Navi of a single unit.

Also, as disclosed in Japanese Patent Application Publication No. 2003-166848, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

Further, United States Patent Publication No. 2002/0152027 discloses a technique of displaying a display screen by means of the control of the in-vehicle apparatus, when the Portable Navi is attached to the in-vehicle apparatus.

However, the electronic apparatus mounted in a vehicle and an electronic system that includes a portable electronic apparatus detachably provided to the electronic apparatus leave room for improving user friendliness.

US 6701161 discloses a multimedia unit for a vehicle, the multimedia unit having a removable operating section. The removable operating section functions as a radio telephone.

EP 1727019 discloses an in-car video/audio computer module including a casing which can be removably received in a receiving slot in the car dashboard.

DE 19893178 discloses a car radio having a removable operating part, so as to provide an 'anti-theft' function to the radio.

The present invention has been made in view of the above circumstances and provides an electronic system, an electronic apparatus, and a method of operating audio units, in which the operability is enhanced. These are defined in the independent claims. Further embodiments are defined in the dependent claims.

Exemplary embodiments of the present invention will be described in detail with reference to the following drawings, by way of example only, wherein:
FIG. 1A shows an exterior view of an in-vehicle system, and FIG. 1B shows a state where a portable apparatus is detached from an in-vehicle apparatus;
FIG. 2 shows a front face portion of the in-vehicle apparatus, from which the portable apparatus is removed;
FIG. 3 is a view showing a state of tilting the front face portion against the main body of the in-vehicle apparatus to expose a CD insertion/ejection slot;
FIG. 4 shows a state of mounting the in-vehicle system in a vehicle;
FIG. 5 shows a configuration of the in-vehicle system;
FIG. 6 shows a configuration of a detecting circuit;
FIG. 7 shows a configuration of the front face portion;
FIG. 8A through FIG. 8C show display examples of the portable apparatus attached to a main body;
FIG. 9A shows a front view, top view, bottom view, left-side view, and right-side view of the portable apparatus, and FIG. 9B is a back view of the portable apparatus;
FIG. 10A through FIG. 10C show operation methods of an audio unit;
FIG. 11 is a flowchart showing a procedure of a controller of the in-vehicle apparatus.

A description will now be given, with reference to the accompanying drawings, of exemplary embodiments of the present invention.

### (Embodiment)

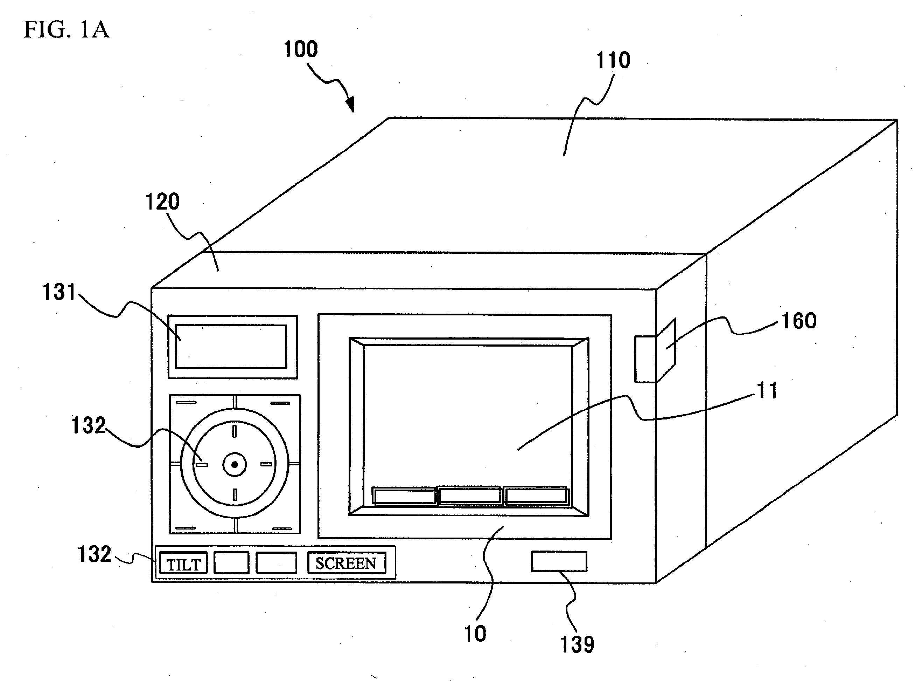

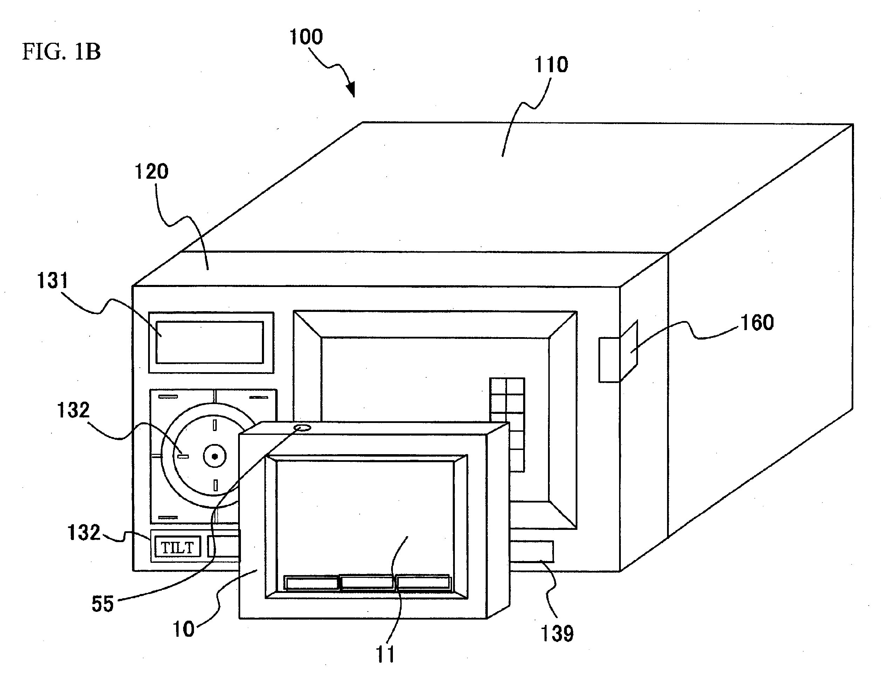

FIG. 1A and FIG. 1B show exterior views of an in-vehicle system 1, as an example of an electronic system. As shown in FIG. 1A and FIG. 1B, the in-vehicle system 1 is composed of: an in-vehicle apparatus 100 (electronic apparatus); and a portable apparatus 10 (portable apparatus) with navigation capabilities. The portable apparatus 10 can be used after being attached at a front face portion 120 of the in-vehicle apparatus 100, as shown in FIG. lA, and can be also used after being detached from the in-vehicle apparatus 100, as shown in FIG. 1B.

The in-vehicle apparatus 100 is capable of playing radio broadcasting or playing music data recorded on a memory medium such as a CD (Compact Disc) or the like, and the in-vehicle apparatus 100 includes: an in-vehicle apparatus main body 110 having a CD player and a CD insertion/ejection slot; and the front face portion 120 having a display portion 131 and an operating portion (main operating portion) 132.

The portable apparatus 10 has navigation capabilities of searching for a guiding path (route) to a destination and displaying the searched guiding path (route) over a map.

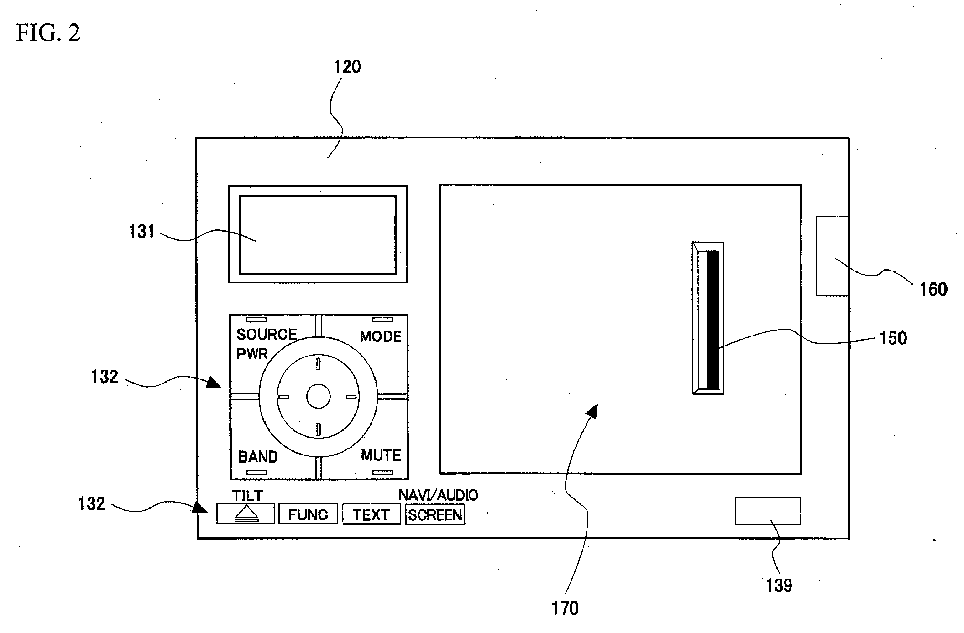

FIG. 2 shows the front face portion (panel) 120 of the in-vehicle apparatus 100, from which the portable apparatus 10 is removed. There is provided an attaching portion 170 in which a recess portion is defined for attaching the portable apparatus 10, at the front face portion 120 of the in-vehicle apparatus 100. The attaching portion 170 is provided with: a connector 150 (housing portion side connector) for electrically coupling the in-vehicle apparatus 100 and the portable apparatus 10; and a lock mechanism (not shown) for securing the portable apparatus 10 to the front face portion 120. When a detach button 160 provided at the front face portion 120 is operated, a lock mechanism, not shown, is unlocked and the portable apparatus 10 is detachable from the in-vehicle apparatus 100.

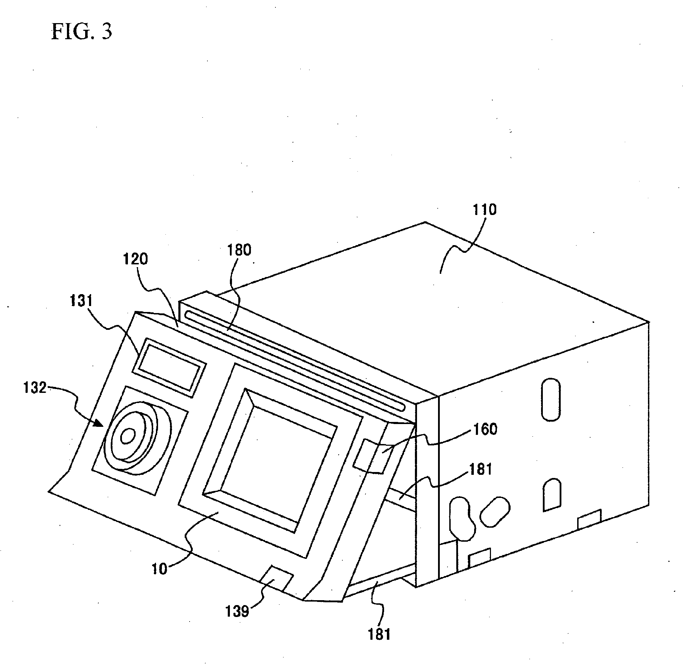

FIG. 3 shows a state of tilting the front face portion 120 against the in-vehicle apparatus main body 110 to expose a CD insertion/ejection slot 180.

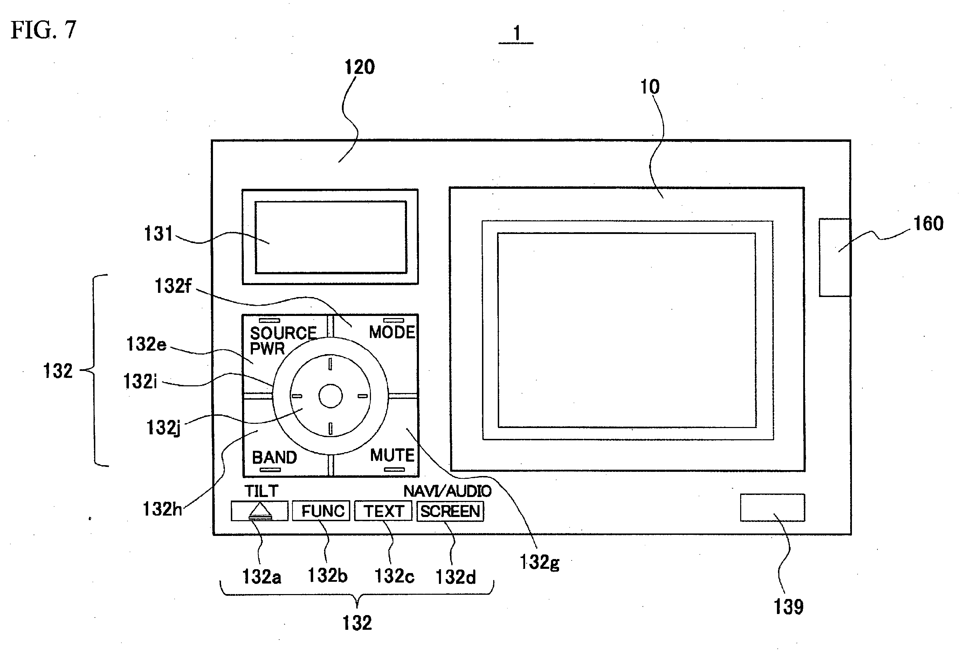

By driving a slider 181 shown in FIG. 3 with a drive mechanism, not shown, the front face portion 120 can be tilted against the in-vehicle apparatus main body 110. By tilting operation, the CD insertion/ejection slot 180 provided in the in-vehicle apparatus main body 110 is exposed, so a CD can be inserted or ejected. There is provided an operation button (a tilt/eject button 132a shown in FIG. 7), at the front face portion 120 of the in-vehicle apparatus 100, and a tilt angle can be set according to the operation of the button.

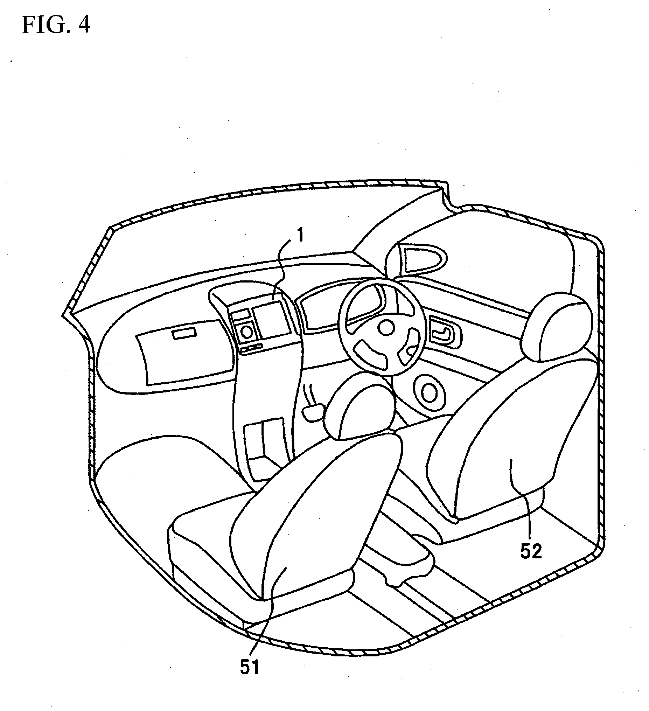

FIG. 4 illustrates an example of mounting the in-vehicle system 1 in a vehicle.

The in-vehicle system 1 is disposed in a dashboard portion substantially in the middle of a front-passenger's seat 51 and a driver's seat 52, as shown in FIG. 4, for example.

Here, a GPS (Global Positioning System) antenna, not shown, of a GPS information receiver 133 is located on the dashboard or attached at an inner side of a front glass (windscreen).

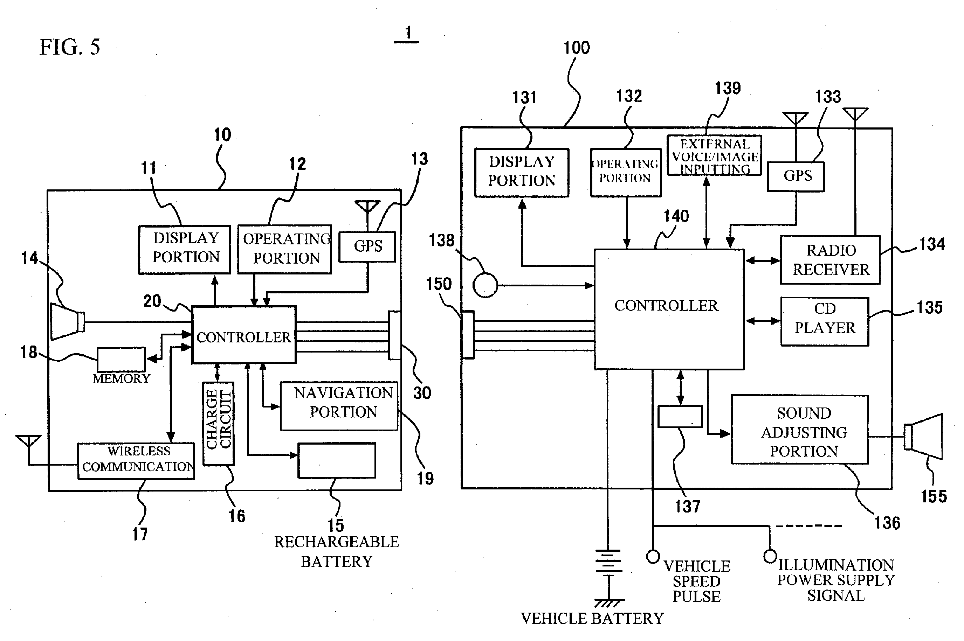

FIG. 5 is a block diagram showing a schematic configuration of the in-vehicle system 1.

The in-vehicle apparatus 100 and the portable apparatus 10 are electrically connected by connectors. The connector 150 is provided at the in-vehicle apparatus 100 side, and a connector 30 (portable apparatus side connector) is provided at the portable apparatus 10. By connecting the connectors 150 and 30, various signals are sent and received between the in-vehicle apparatus 100 and the portable apparatus 10 to function as the in-vehicle system 1. The connectors 150 and 30 are respectively provided with power supply terminals for supplying power to the portable apparatus 10 from the battery of the vehicle. When the portable apparatus 10 is connected to the in-vehicle apparatus 100 and power is supplied to the in-vehicle apparatus 100 (e.g. from the vehicle battery), the power is also supplied to the portable apparatus 10 via the power supply terminals.

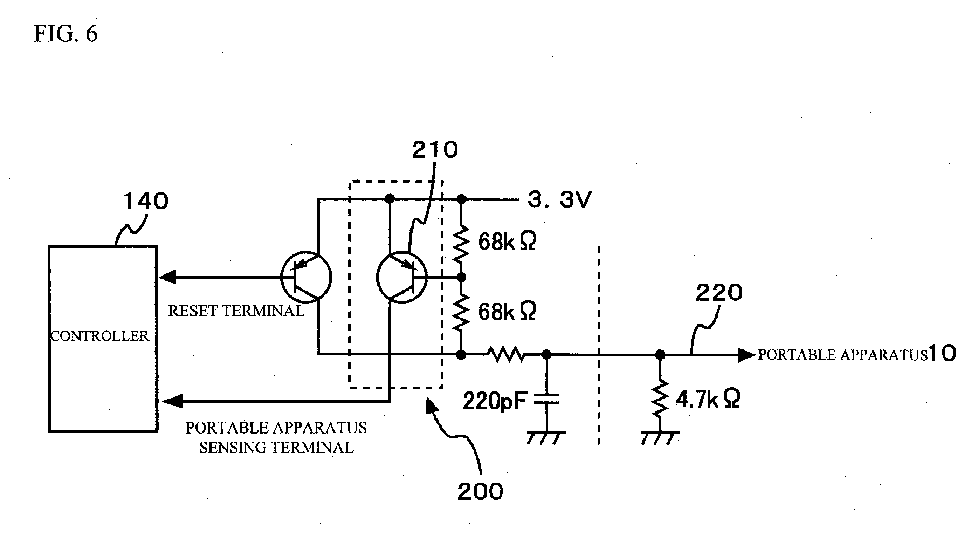

Also, at a connecting portion connecting the in-vehicle apparatus 100 and the portable apparatus 10, there is provided a detecting circuit 200 detecting whether or not the portable apparatus 10 is connected to the in-vehicle apparatus 100. FIG. 6 shows a configuration of the detecting circuit 200.

When the portable apparatus 10 is connected to a power line 220 for supplying power to the portable apparatus 10, a transistor 210 turns on. Accordingly, when the portable apparatus 10 is connected to the power line 220, a signal of 3.3 V is output to a controller 140 of the in-vehicle apparatus 100. Also, when the portable apparatus 10 is removed from the power line 220, the transistor 210 turns off. Then, a signal of 0 V is output to the controller 140 of the in-vehicle apparatus 100.

When the output voltage of 3.3 V is sensed at a portable apparatus sensing terminal connecting the transistor 210 and the controller 140, the controller 140 senses (detects) a connected state. When 0 V is sensed, the controller 140 senses an unconnected state.

The in-vehicle apparatus 100 is provided with: the display portion 131; the operating portion 132; the GPS information receiver 133; a radio receiver 134; a CD player 135; a sound adjusting portion 136; a memory 137; a microphone 138; an external voice/image inputting portion 139; the controller 140; and the connector 150. The in-vehicle apparatus 100 is activated by supplying the power from the battery of the vehicle, when the engine key is positioned at Acc or IG.

Hereinafter, the function of each part will be described in detail.

The display portion 131 is provided with a liquid crystal panel and a backlight, and displays a frequency of the received broadcasting, a track number of music being played, a music name being played, and the like, according to the 13-segment display.

The operating portion 132 is provided for selectively changing the operation mode of the in-vehicle apparatus 100, and for operating in various modes that have been changed. The operating portion 132 is provided with a group of buttons including: the tilt/eject button 132a; a function (represented as FUNC in the drawing)/AF button 132b; a TEXT button 132c; a SCREEN button 132d; a SOURCE/PWR button 132e; a MODE button 132f; a MUTE button 132g; a BAND change button 132h; a rotary button 132i; a cross key/enter key button 132j, as shown in FIG. 7.

Here, a description will be given of switching the display between the portable apparatus 10 and the in-vehicle apparatus 100.

Firstly, the in-vehicle apparatus 100 turns on when the SOURCE/POWER button 132e of the in-vehicle apparatus 100 is pushed. When the SOURCE/POWER button 132e is pushed for a short period of time while the portable apparatus 10 is on, the source is changed to the CD playing or radio broadcasting. At this time, the information on the selected source is displayed on the display portion 131 of the in-vehicle apparatus 100, and the navigation image is displayed on a display portion 11 of the portable apparatus 10, without relation to the source.

Next, when the SCREEN button 132d is pushed, the navigation image displayed on the display portion 11 of the portable apparatus 10 can be changed to an image corresponding to the source selected at the in-vehicle apparatus 100.

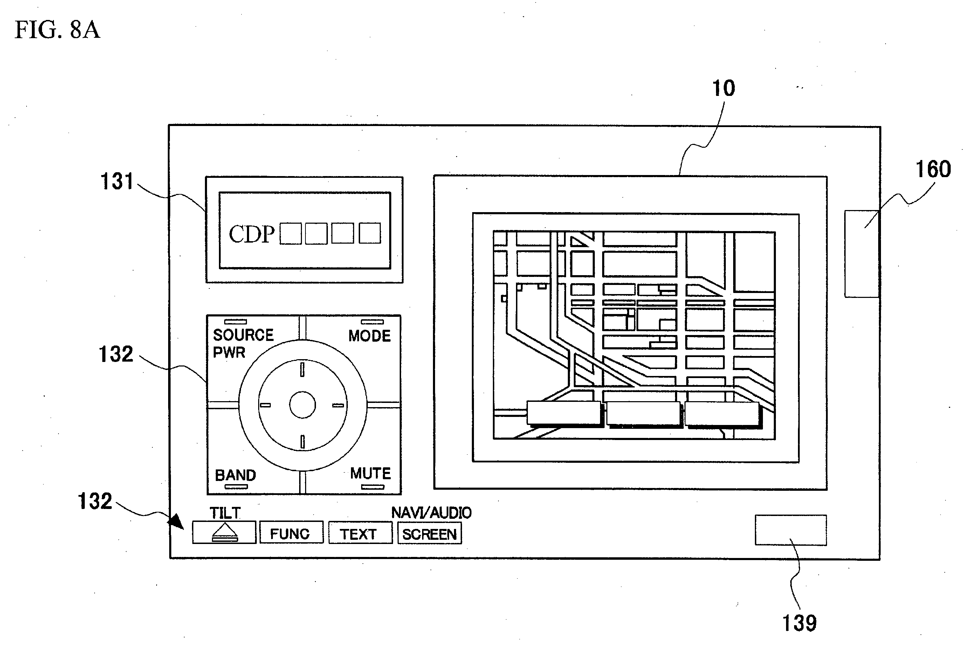

FIG. 8A shows a state where the portable apparatus 10 is attached to the in-vehicle apparatus 100 while the CD is being played and a navigation image is being displayed on the portable apparatus 10.

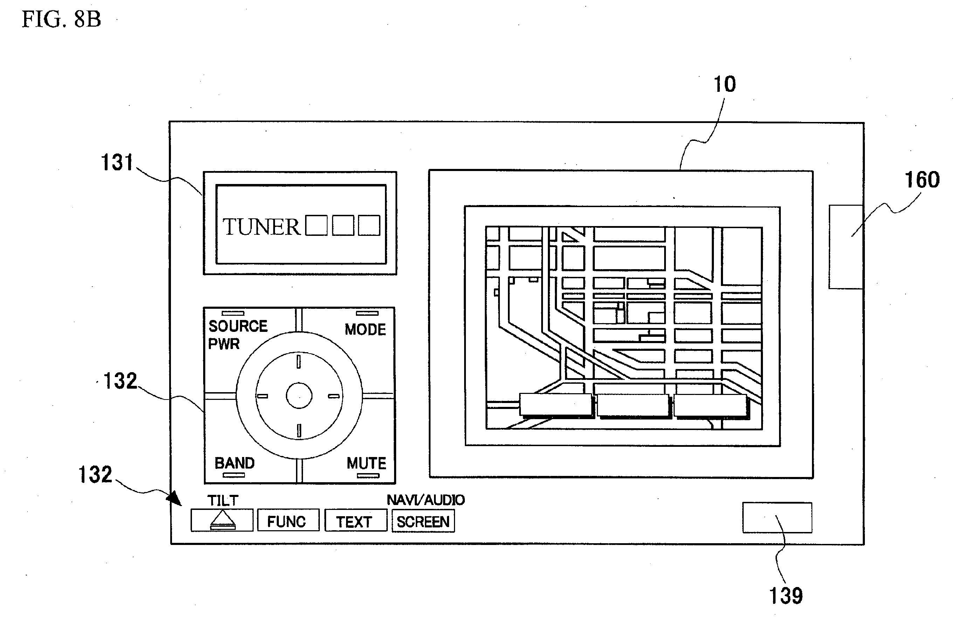

When the SOURCE/POWER button 132e is pushed in the state of FIG. 8A and the source is changed from the CD playing to the radio broadcasting, the information on the radio source is displayed on the display portion 131, as shown in FIG. 8B. Also, the navigation image remains being displayed on the display portion 11 of the portable apparatus 10.

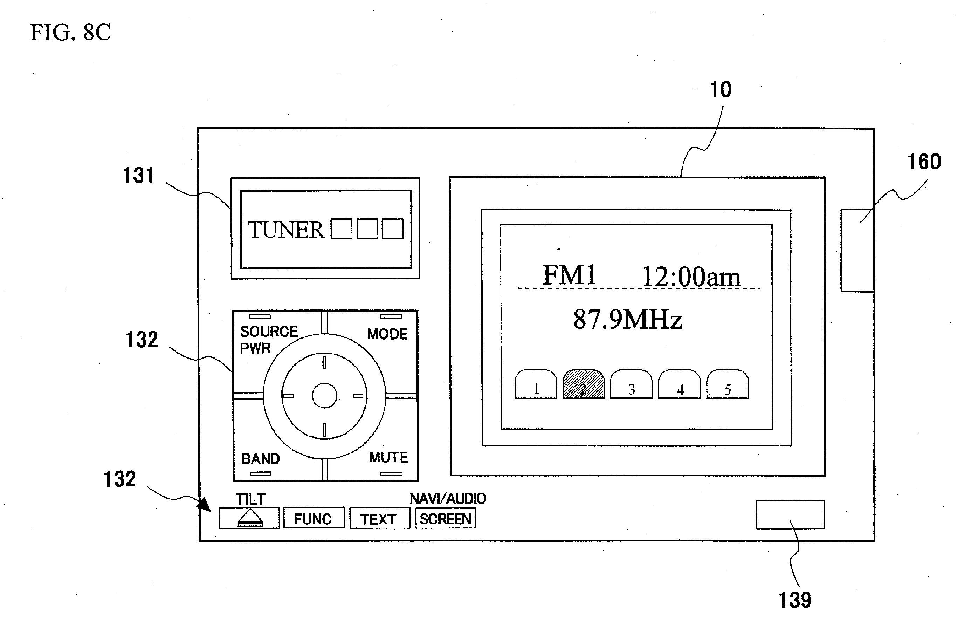

Then, when a user pushes the SCREEN button 132d, the image corresponding to the source being processed by the in-vehicle apparatus 100 is displayed on the display portion 11 of the portable apparatus 10, as shown in FIG. 8C (radio image is displayed in FIG. 8C). A touch panel, described later, is provided in the display portion 11 of the portable apparatus 10. A user is capable of operating the source currently being processed, by selecting the operation buttons displayed on the display portion 11.

In addition, when the SCREEN button 132d is pushed with the radio screen being displayed on the display portion 11, it is possible to return to the navigation image from the radio image, as shown in FIG. 8B. When the portable apparatus 10 is removed from the in-vehicle apparatus 100, the operation of the SCREEN button 132d is invalid.

Furthermore, when a USB (Universal Serial Bus) or the like is connected to the external voice/image inputting portion 139 with the portable apparatus 10 removed from the in-vehicle apparatus 100, it is possible to prevent the change to the USB source, even if the SOURCE/POWER button 132e is pushed.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation portion 19 of the portable apparatus 10, and then the position of the vehicle in which the in-vehicle apparatus 100 having the portable apparatus 10 therein is determined based on the GPS signal.

Herein, the GPS signal may be output to the navigation portion of the portable apparatus 10 through the controller 140, instead of through the controller 20. Alternatively, the GPS information receiver 133 may be composed of the GPS antenna only, so that the GPS signal received by the GPS antenna may be output to the tuner of a GPS information receiver 13, described later, without passing through the controller 140 or the controller 20. Further alternatively, the GPS signal received by a GPS antenna may be output through the controller 20 to the tuner of the GPS information receiver 13 without passing through the controller 140. Various changes may be made as necessary.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The CD player 135 reproduces the data stored in the CD, and outputs the reproduced signal to the controller 140.

Herein, the demodulated signal output from the radio receiver 134 may be output to the sound adjusting portion 136, described later, without passing through the controller 140.

The sound adjusting portion 136 implements signal processing such as volume control or tone control on an audio signal received or demodulated by the radio receiver 134 or the audio signal reproduced by the CD player 135, and then outputs the processed signal to a speaker 155.

The memory 137 may be composed of a RAM (Random Access Memory) from which data is readable and into which data is writable, and temporarily stores information necessary for control.

The microphone 138 is provided for hands-free communication, and receives the voices of users in the vehicle.

The external voice/image inputting portion 139 is provided with a connection terminal with an external device such as a USB memory, portable audio device, or the like so that an audio signal or data from the external device may be input. The external voice/image inputting portion 139 then sends the signal or data to the controller 140, and outputs the audio signal, data, or the like to the external device connected.

The controller 140 controls the radio receiver 134, the CD player 135, and the sound adjusting portion 136, according to the operation by means of the operating portion 132.

Also, the controller 140 outputs various signals through the connector 150 to the portable apparatus 10, and controls the in-vehicle apparatus 100 on the basis of the various signals input from the portable apparatus 10. For example, the controller 140 outputs the GPS signal received by the GPS information receiver 133 or the audio signal input through the microphone 138, to the portable apparatus 10 by way of the connector 150.

Here, the audio signal input through the microphone 138 may be output to the portable apparatus 10 by way of the connector 150, without through the controller 140.

In addition, the voice on communication over a mobile phone connected to the portable apparatus 10 is input through the connector 150 into the controller 140, and is then output through the sound adjusting portion 136 to the speaker 155.

Furthermore, the controller 140 acquires an operation signal corresponding to a menu image of various modes displayed on the display portion 11 of the portable apparatus 10, from the controller 20 of the portable apparatus 10, and then controls the radio receiver 134 and the CD player 135.

Also, the power is supplied to the controller 140 from the battery mounted in the vehicle. When the portable apparatus 10 is connected, the controller 140 outputs the power supplied from the battery to the portable apparatus 10.

Here, a vehicle speed pulse and an illumination power supply signal are input into the controller 140 from a vehicle. The controller 140 transfers such input vehicle speed pulse to the controller 20 of the portable apparatus 10. Meanwhile, the vehicle speed pulse may be configured not to be input into the in-vehicle apparatus 100.

In addition, the controller 140 sends the illumination power supply signal to the controller 20 of the portable apparatus 10. The controller 20 of the portable apparatus 10 changes the luminance level of the backlight in the display portion 11 according to the illumination power supply signal.

When a light of a vehicle is turned on and the illumination power supply signal is then turned on, the controller 20 lowers the luminance level of the backlight to darken the display portion 11. Meanwhile, when the illumination power supply signal is turned off, the controller 20 heightens the luminance level of the backlight to lighten the display portion 11.

Next, a description will be given of the portable apparatus 10. The portable apparatus 10 is provided with: the display portion 11; an operating portion 12; the GPS information receiver 13; a speaker 14; a rechargeable battery 15; a charge circuit 16; a wireless communication transmitter/receiver 17; a memory 18; the navigation portion 19; the controller 20; and the connector 30.

Hereinafter, functions of the components will be described in detail.

The display portion 11 is provided with a liquid crystal panel and a backlight, and is capable of displaying map information generated by the navigation portion 19 and guiding path (route) information to a destination, the received broadcasting frequency transferred from the in-vehicle apparatus 100, a music track number played, music name played, and the like.

Here, the display portions 11 and 131 may employ a flat panel display other than a liquid crystal panel. Examples are organic light emitting display, plasma display panel, cold-cathode flat panel display, or the like.

The touch panel 12 is, for example, disposed on the display screen. When the touch panel is touched by a finger or a dedicated pen, the touched position is detected to determine whether or not there is an input operation.

The GPS information receiver 13 includes an antenna and a tuner, and receives the GPS signal from a satellite. Such received GPS signal is output to the navigation portion 19, and the vehicle location is detected based on the GPS signal. Meanwhile, the in-vehicle apparatus 100 is also provided with the GPS information receiver 133. However, when the portable apparatus 10 is attached to the in-vehicle apparatus 100, the location of the vehicle is identified by use of the GPS signal (and the vehicle speed pulse) received by the GPS information receiver 133. When the portable apparatus 10 is used alone, the location thereof is specified by use of the GPS signal received by the GPS information receiver 13.

The speaker 14 is provided for outputting the audio information of the navigation portion 19, and outputs the audio information only when the portable apparatus 10 is detached from the in-vehicle apparatus 100, namely, used alone separately.

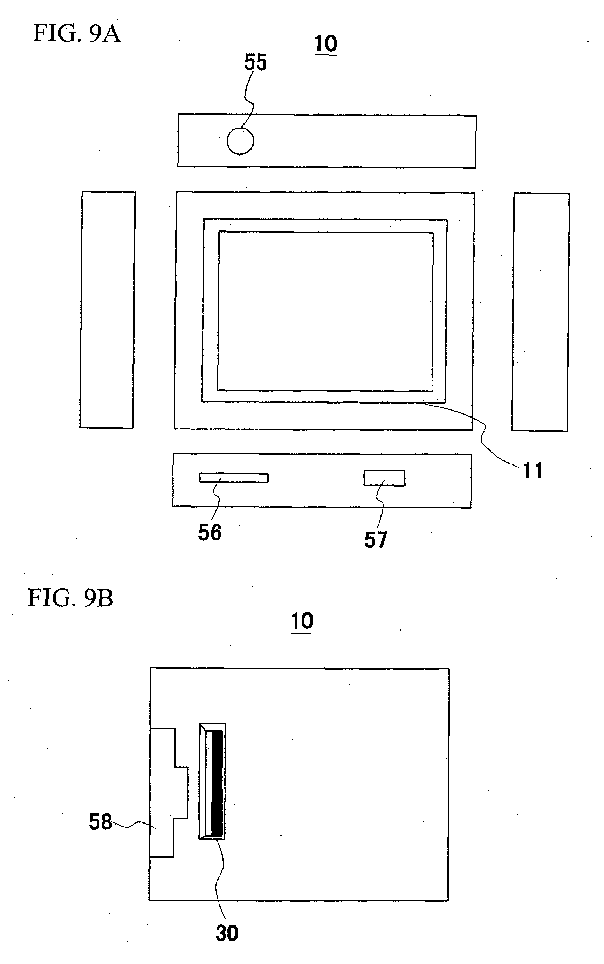

The rechargeable battery 15 supplies power to each portion of the portable apparatus 10, when the portable apparatus 10 is detached from the in-vehicle apparatus 100. When the portable apparatus 10 is attached to the in-vehicle apparatus 100, the power is supplied through the power supply terminals of the connector 30 from the battery of the vehicle and the rechargeable battery 15 is charged by the charge circuit 16. Also, the charge circuit 16 can be supplied with power from the connection terminal through a USB slot 57 (see FIG. 9A), and the rechargeable battery 15 can be charged thereby.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation portion 19 includes a map information storing portion that stores the map information used for navigation, determines current location information with GPS signal from the GPS information receiver 133 or the GPS information receiver 13, and creates a map image for navigation. The created map image may be displayed on the display portion 11. In addition, when the in-vehicle apparatus 100 and the portable apparatus 10 are connected, the vehicle speed pulse is acquired from the vehicle so that the accuracy of the location detection of the vehicle can be improved.

The controller 20 controls each part of the portable apparatus 10. Also, the controller 20 outputs various signals to the in-vehicle apparatus 100 through the connector 30, and controls the portable apparatus 10 based on the various signals input from the in-vehicle apparatus 100. For example, the controller 20 acquires the GPS signal received by the GPS information receiver 133 of the in-vehicle apparatus 100, and outputs it to the navigation portion 19. Also, the controller 20 acquires the audio signal input by the microphone 138 of the in-vehicle apparatus 100 from the controller 140 of the in-vehicle apparatus 100, and controls the navigation portion 19 according to the audio signal acquired. That is to say, the navigation portion 19 can be operated in a hands-free manner. The voice on communication over the mobile phone connected to the wireless communication transmitter/receiver 17 is output to an in-vehicle apparatus side through the connector 30, and is caused to output from the speaker 155 of the in-vehicle apparatus 100. The operation signal on the menu screen or content screen displayed on the display portion 11 is output to the controller 140 of the in-vehicle apparatus 100 through the connector 30. The controller 140 controls the radio receiver 134 or the CD player 135 according to the operation signal transmitted from the controller 20 of the portable apparatus 10.

FIG. 9A shows a front view, top view, bottom view, left-side view, and right-side view of the portable apparatus 10. FIG. 9B is a back view of the portable apparatus 10.

The top face of the portable apparatus 10 is provided with a power button 55 for turning on or off the power of the portable apparatus. The bottom face of the portable apparatus 10 is provided with: an SD (Secure Digital) memory card slot 56; and the USB slot 57. Since the SD card or the USB memory stores the map information, by inserting the SD card or the USB memory into the slots, the controller 20 outputs the map information to the navigation portion 19.

Also, at a top face of the portable apparatus 10, there is provided the power button 55. The power of the portable apparatus 10 is turned on or off by the control of the in-vehicle apparatus 100, when the portable apparatus is attached to the in-vehicle apparatus 100. In addition, when the portable apparatus 10 is removed from the in-vehicle apparatus 100 and used alone, the power is operated on the basis of the on and off operations of the power button 55.

In addition, at a backside of the portable apparatus 10, there are provided: the connector 30 electrically connectable with the in-vehicle apparatus 100; and an engagement portion 58 to be engaged with a lock mechanism (not shown) provided at the in-vehicle apparatus 100 side.

In the electronic system employed in the present exemplary embodiment, when the portable apparatus 10 is attached to the in-vehicle apparatus 100 side, an audio unit (which corresponds to the CD player 135 and the radio receiver 134 according to the present exemplary embodiment, and in addition or instead, it is possible to mount an audio unit that reads and reproduces music data recorded in MD (Mini Disc), hard disk, DVD, flash memory or the like) at the in-vehicle apparatus 100 side is operated by use of the touch panel 12 of the portable apparatus 10.

In the operation of the operation buttons provided in the in-vehicle apparatus 100, since the operation buttons are a little apart from the display portion displaying the operation result, the line of sight has to be moved at the time of operation. On the other hand, in the operation with the use of the touch panel displaying buttons and the operation result on the display portion 11, the line of sight need not to be moved by a great amount, thereby improving the operability.

The operation buttons less frequently used, such as function settings of the audio, are operated by use of the touch panel 12, permitting the number of the operation buttons arranged at the in-vehicle apparatus 100 side to be reduced. In addition, if the operation of the function equipped in the in-vehicle apparatus 100 is limited such that the operation cannot be accepted without the portable apparatus 10 attached to the in-vehicle apparatus 100, the number of the operation buttons arranged at the in-vehicle apparatus 100 side can be further reduced.

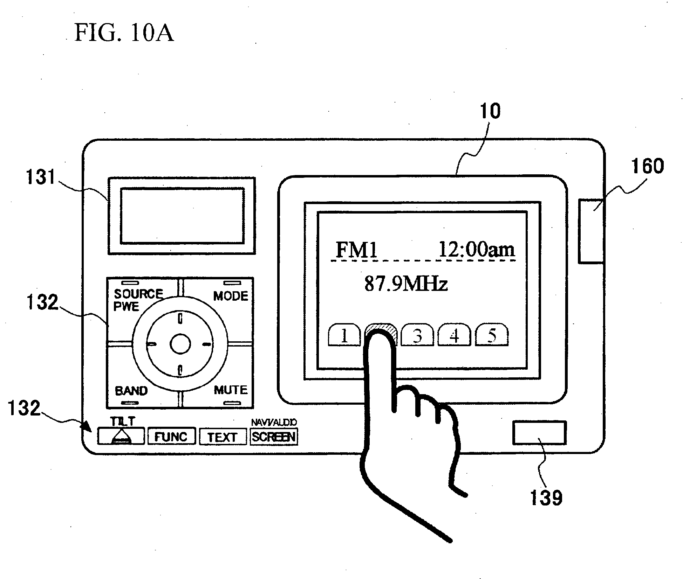

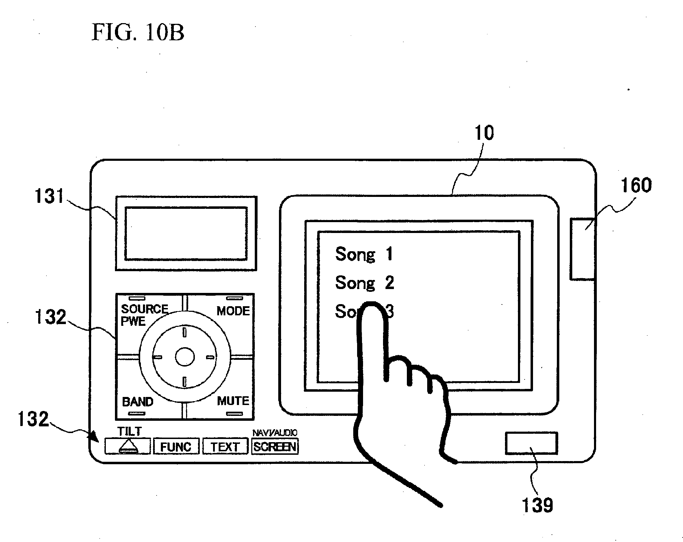

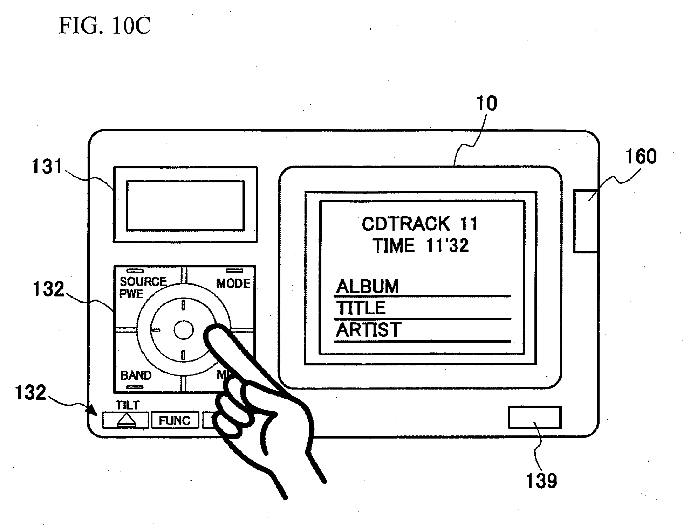

Also, instead of the operation of all the audio units by use of the touch panel 12, a portion of the audio operation is performed by means of the touch panel 12 and the remaining audio operation is performed by means of the operating portion 132 of the in-vehicle apparatus 100. This distributes the operation into the touch panel 12 and the operating portion 132, whereby the load applied to the touch panel 12 and the operating portion 132 can be reduced. For example, as shown in FIG. 10A and FIG. 10B, when operating the radio tuner or selecting music song data recorded in the external apparatus connected via the external voice/image inputting portion 139, the touch panel of the portable apparatus 10 is used. Also, when operating the CD player 135 as shown in FIG. 10C, the operating portion 132 of the in-vehicle apparatus 100 side is used. In both cases, a screen corresponding to the audio unit selected is displayed on the display portion 11 of the portable apparatus 10.

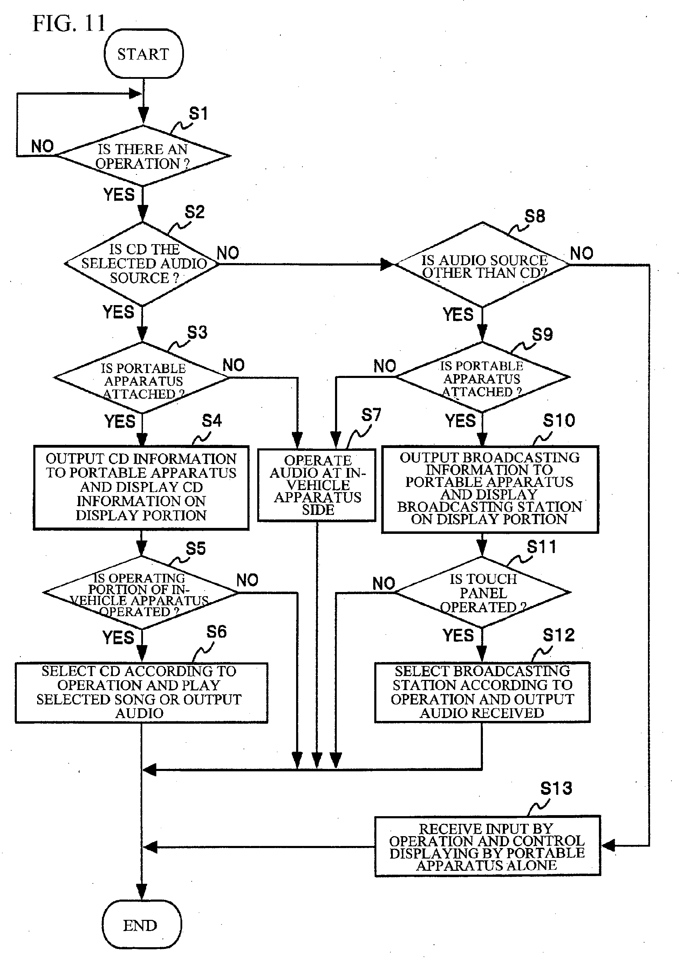

A procedure of a controller of the in-vehicle apparatus will be described, with reference to the flowchart shown in FIG. 11.

When the operation button of the operating portion (operation inputting portion) 132 or the touch panel 12 is operated (step S1/YES), the controller 140 of the in-vehicle apparatus 100 determines whether or not an audio source selected by the operation is a CD (step S2). If the selected audio source is a CD (step S2/YES), it is determined whether or not the portable apparatus 10 is attached (step S3). If attached, CD information is output to the portable apparatus 10 and the CD information is displayed on the display portion 11 of the portable apparatus 10 (see FIG. 11C). The CD information includes information on music or the like to be reproduced.

In addition, if the portable apparatus 10 is not attached to the in-vehicle apparatus 100 (step S3/NO), the audio unit is operated by the operating portion 132 of the in-vehicle apparatus 100 (step S7). In this case, a status of the audio such as CD or the like is displayed on the display portion 131.

If the operating portion 132 of the in-vehicle apparatus 100 is operated with the CD information displayed on the display portion 11 of the portable apparatus 10 (step S5), a song recorded on the CD is selected according to the operation performed and the selected song is played and the audio thereof is output (step S6).

Further, if another audio unit other than CD is selected as an audio source at the operation of step S1 (step S2/NO and step S8/YES), it is determined whether or not the portable apparatus 10 is attached to the in-vehicle apparatus (step S9). If the portable apparatus 10 is attached (step S9/YES), the controller 140 outputs information on a broadcasting station to the portable apparatus 10, and causes the display portion 11 to display the broadcasting station (step S10). If the touch panel 12 is operated with the broadcasting station being displayed on the display portion 11 of the portable apparatus 10 (step S11/YES), the broadcasting station is selected according to the operation performed, electromagnetic waves from the selected broadcasting station are received, and the audio is outputted (step S12). Here, when the information is displayed on the display portion 11, the display portion 131 may be prohibited from displaying the information, or may display different information from the display portion 11.

Also, in the operation of step S1, if another apparatus rather than the audio unit, namely, the portable apparatus 10 is selected (step S8/NO), the display on the display portion 11 is controlled or the operation of the display portion 11 is performed by the portable apparatus 10 alone (step S13).

In the above-described embodiment, the controller 140 of the in-vehicle apparatus 100 serves as a main controller, and controls the portable apparatus 10; however, the controller 20 of the portable apparatus 10 may be a main controller to control the in-vehicle apparatus 100.

Furthermore, the portable apparatus 10 may be composed of a mobile telephone with the navigation functionality or a personal digital assistant (PDA). Furthermore, instead of the CD insertion/ejection slot 180 and the CD player 135, there may be provided an insertion/ejection slot and a player thereof for another memory media such as MD (Mini Disc), DVD (Digital Versatile Disk), memory card, or the like, and there may also be provided insertion/ejection slots and players for multiple types of memory media.

Although a few specific exemplary embodiments employed in the present invention have been shown and described, it would be appreciated by those skilled in the art that changes may be made in these exemplary embodiments without departing from the principles and spirit of the invention, the scope of which is defined in the claims.

## Claims

1. An electronic system comprising an electronic apparatus (100) and a portable electronic apparatus (10) detachably provided to the electronic apparatus (100), wherein:
the portable electronic apparatus (10) comprises a display portion (11) equipped with a touch panel (12) for detecting an instruction from an operator and a first controller (20) adapted to notify the instruction detected by the touch panel (12), to the electronic apparatus (100); and
the electronic apparatus (100) comprises multiple audio units (134, 135), each of which can output a respective audio signal independently, and a second controller (140) adapted to control a portion of the multiple audio units according to a notification by the first controller (20); **characterised in that**:
the electronic apparatus (100) further comprises an operation inputting portion (132) through which the operator can input desired operations of the multiple audio units (134, 135); and wherein
the second controller (140) is adapted to perform, when the portable electronic apparatus is attached to the electronic apparatus, control of the remaining audio units of the multiple audio units (134, 135) according to an operation inputted through the operation inputting portion (132).

2. The electronic system as claimed in claim 1, wherein the electronic apparatus (100) further comprises:
a detecting circuit (200) for detecting whether or not the portable electronic apparatus (10) is connected to the electronic apparatus (100); and wherein
if the detecting circuit (200) detects that the portable electronic apparatus (10) is not attached to the electronic apparatus (100), each said audio unit (134, 135) is operated by the operation inputting portion (132).

3. An electronic apparatus (100) that is detachably provided with a portable electronic apparatus (10) having a touch panel (12), the electronic apparatus (100) comprising:
multiple audio units (134, 135), each of which can output a respective audio signal independently, wherein
when receiving an instruction detected by the touch panel (12) from the portable electronic apparatus (10), the electronic apparatus (100) is operable to control the audio signal output by a portion of said multiple audio units (134, 135) based on the instruction; and **characterised in that**
the electronic apparatus (100) further comprises an operation inputting portion (132) and is operable, when the portable apparatus is attached, to perform the audio operations of the remaining audio units of the multiple audio units by means of instructions inputted through the operation inputting portion (132).

4. A method of operating audio units, by which multiple audio units (134, 135) equipped in an electronic apparatus (100) are operated by a portable electronic apparatus (10) detachably mounted to the electronic apparatus (100), the method comprising:
detecting instructions from an operator with a touch panel (12) provided in the portable electronic apparatus (10);
sending the detected instructions to the electronic apparatus (100);
controlling a portion of the said audio units (134, 135) according to the sent instructions; the method **characterised by** further comprising
detecting other instructions from the operator with an operation inputting portion (132) provided on the electronic apparatus (100); and
controlling audio operations of the remaining audio units of the said multiple audio units (135, 134) according to said other instructions.

5. The method according to claim 4, wherein the portable electronic apparatus (10) is operable as a navigation device.

## Patentansprüche

1. Elektronisches System, umfassend eine elektronische Vorrichtung (100) und eine tragbare elektronische Vorrichtung (10), die lösbar mit der elektronischen Vorrichtung (100) bereitgestellt wird, wobei
die tragbare elektronische Vorrichtung (10) einen Anzeigeabschnitt (11) umfasst, ausgestattet mit einer Berührungsoberfläche (12) zum Erfassen einer Anweisung von einem Anwender, und eine erste Steuerung (20), ausgelegt zum Angeben der von der Berührungsoberfläche (12) erfassten Anweisung, an die elektronische Vorrichtung (100); und
die elektronische Vorrichtung (100) mehrere Audioeinheiten (134, 135) umfasst, von denen jede unabhängig ein jeweiliges Audiosignal ausgeben kann, und eine zweite Steuerung (140), ausgelegt zum Steuern eines Teils der mehreren Audioeinheiten gemäß einer Mitteilung durch die erste Steuerung (20); **dadurch gekennzeichnet, dass**
die elektronische Vorrichtung (100) zudem einen Ausführungseingabeabschnitt (132) umfasst, durch den der Anwender gewünschte Operationen der mehreren Audioeinheiten (134, 135) eingeben kann; und wobei
die zweite Steuerung (140) ausgelegt ist zum Ausführen, ist die tragbare elektronische Vorrichtung (10) mit der elektronischen Verbindung verbunden, einer Steuerung der verbleibenden Audioeinheiten der mehreren Audioeinheiten (134, 135) gemäß einer durch den Ausführungseingabeabschnitt (132) eingegebenen Ausführung.

2. Elektronisches System gemäß Anspruch 1, wobei die elektronische Vorrichtung (100) zudem umfasst
eine Erfassungsschaltung (200) zum Erfassen, ob die tragbare elektronische Vorrichtung (10) mit der elektronischen Vorrichtung (100) verbunden ist oder nicht, und worin,
erfasst die Erfassungsschaltung (200), dass die tragbare elektronische Vorrichtung (10) nicht mit der elektronischen Vorrichtung (100) verbunden ist, jeder der Audioeinheiten (134, 135) durch den Ausführungseingabeabschnitt (132) betrieben wird.

3. Elektronische Vorrichtung (100), die mit einer tragbaren elektronischen Vorrichtung (10) mit einer Berührungsoberfläche (12) lösbar bereitgestellt wird, die elektronische Vorrichtung (100) umfassend
mehrere Audioeinheiten (134, 135), von denen jede unabhängig ein jeweiliges Audiosignal ausgeben kann, wobei
wird eine von der Berührungsoberfläche (12) erfasste Anweisung von der tragbaren elektronischen Vorrichtung (10) empfangen, die elektronische Vorrichtung (100) ausführbar ist zum Steuern des von einem Teil der mehreren Audioeinheiten (134, 135) auf der Basis der Anweisung ausgegebenen Audiosignals; und **gekennzeichnet dadurch, dass**
die elektronische Vorrichtung (100) zudem einen Ausführungseingabeabschnitt (132) umfasst und ausführbar ist, ist die tragbare Vorrichtung angeschlossen, zum Ausführen der Audiooperationen der verbleibenden Audioeinheiten der mehreren Audioeinheiten mit Hilfe von Durch den Ausführungseingabeabschnitt (132) eingegebenen Instruktionen.

4. Verfahren zum Betreiben von Audioeinheiten, durch welche mehrere in einer elektronischen Vorrichtung (100) eingebrachte Audioeinheiten (134, 135) durch eine tragbare elektronische Vorrichtung, die lösbar an der elektronischen Vorrichtung (100) befestigt ist, betrieben werden, das Verfahren umfassend
Erfassen von Anweisungen von einem Anwender mit einer in der tragbaren elektronischen Vorrichtung (10) bereitgestellten Berührungsoberfläche (12);
Senden der erfassten Anweisungen an die elektronische Vorrichtung (100); Steuern eines Teils der Audioeinheiten (134, 135) gemäß den gesendeten Anweisungen; wobei das Verfahren **dadurch gekennzeichnet ist, dass** es zudem umfasst
Erfassen weiterer Anweisungen vom Anwender mit einem auf der elektronischen Vorrichtung (100) bereitgestellten Ausführungseingabeabschnitt (132); und
Steuern von Audiooperationen der weiteren Audioeinheiten der mehreren Audioeinheiten (135, 134) gemäß den weiteren Anweisungen.

5. Verfahren gemäß Anspruch 4, wobei die tragbare elektronische Vorrichtung (10) als Navigationsvorrichtung anwendbar ist.

## Revendications

1. Un système électronique comprenant un appareil électronique (100) et un appareil électronique portatif (10) fixé de manière amovible à l'appareil électronique (100), où :
l'appareil électronique portatif (10) comprend une partie affichage (11) équipée d'un panneau tactile (12) pour la détection d'une instruction provenant d'un opérateur et un premier dispositif de commande (20) adapté de façon à signaler l'instruction détectée par le panneau tactile (12) à l'appareil électronique (100), et
l'appareil électronique (100) comprend une pluralité d'unités audio (134, 135), chacune d'elles pouvant produire en sortie indépendamment un signal audio respectif, et un deuxième dispositif de commande (140) adapté de façon à commander une partie de la pluralité d'unités audio en fonction d'une notification par le premier dispositif de commande (20), **caractérisé en ce que** :
l'appareil électronique (100) comprend en outre une partie de saisie d'opération (132) par l'intermédiaire de laquelle l'opérateur peut saisir des opérations souhaitées de la pluralité d'unités audio (134, 135), et où
le deuxième dispositif de commande (140) est adapté de façon à exécuter, lorsque l'appareil électronique portatif est fixé à l'appareil électronique, la commande des unités audio restantes de la pluralité d'unités audio (134, 135) en fonction d'une opération saisie par l'intermédiaire de la partie de saisie d'opération (132).

2. Le système électronique selon la revendication 1, où l'appareil électronique (100) comprend en outre :
un circuit de détection (200) pour détecter si l'appareil électronique portatif (10) est ou n'est pas raccordé à l'appareil électronique (100), et où si le circuit de détection (200) détecte que l'appareil électronique portatif (10) n'est pas fixé à l'appareil électronique (100), chacune desdites unités audio (134, 135) est actionnée par la partie de saisie d'opération (132).

3. Un appareil électronique (100) qui est fixé de manière amovible à un appareil électronique portatif (10) possédant un panneau tactile (12), l'appareil électronique (100) comprenant :
une pluralité d'unités audio (134, 135), chacune d'elles pouvant produire en sortie indépendamment un signal audio respectif, où
lors de la réception d'une instruction détectée par le panneau tactile (12) provenant de l'appareil électronique portatif (10), l'appareil électronique (100) est conçu de façon à commander le signal audio produit en sortie par une partie de ladite pluralité d'unités audio (134, 135) en fonction de l'instruction, et **caractérisé en ce que**
l'appareil électronique (100) comprend en outre une partie de saisie d'opération (132) et est conçu, lorsque l'appareil portatif est fixé, de façon à exécuter les opérations audio des unités audio restantes de la pluralité d'unités audio au moyen d'instructions saisies par l'intermédiaire de la partie de saisie d'opération (132).

4. Un procédé d'actionnement d'unités audio, au moyen duquel une pluralité d'unités audio (134, 135) installées dans un appareil électronique (100) sont actionnées par un appareil électronique portatif (10) monté de manière amovible sur l'appareil électronique (100), le procédé comprenant :
la détection d'instructions provenant d'un opérateur avec un panneau tactile (12) installé sur l'appareil électronique portatif (10),
l'envoi des instructions détectées à l'appareil électronique (100),
la commande d'une partie desdites unités audio (134, 135) en fonction des instructions envoyées, le procédé étant **caractérisé en ce qu'**il comprend en outre :
la détection d'autres instructions provenant de l'opérateur avec une partie de saisie d'opération (132) installée sur l'appareil électronique (100), et
la commande d'opérations audio des unités audio restantes de ladite pluralité d'unités audio (135, 134) en fonction desdites autres instructions.

5. Le procédé selon la revendication 4, où l'appareil électronique portatif (10) se présente sous la forme d'un dispositif de navigation.
